# EUROPÄISCHE PATENTSCHRIFT

(11) **EP 2 505 933 B1**
(45) Veröffentlichungstag und Bekanntmachung des Hinweises auf die Patenterteilung: **03.06.2015**
(21) Anmeldenummer: 12000654.9
(22) Anmeldetag: 01.02.2012
(51) Int. Cl.: E04B 7/18, E04D 13/00, H01L 31/048, F24J 2/52, F24J 2/04

(54) **Solarmodulanordnung am Dach**
Roof-based solar module assembly
Agencement de module solaire sur toiture

(30) Priorität: 14.02.2011 DE 102011011833
(43) Veröffentlichungstag der Anmeldung: 03.10.2012
(73) Patentinhaber: ROTO FRANK AG, 70771 Leinfelden-Echterdingen (DE)
(72) Erfinder: Klöpfer, Hannes, 97980 Bad Mergentheim (DE); Wittmann, Dieter, 97980 Apfelbach (DE); Lieb, Christian, 97999 Neuses (DE)
(74) Vertreter: Grosse, Rainer

(56) Entgegenhaltungen:
- DE-A1- 19 615 306
- DE-A1- 19 912 743
- DE-A1-102004 001 875
- DE-U1-202007 012 608
- FR-A1- 2 944 818

## Beschreibung

Die Erfindung betrifft eine Dachanordnung mit einer Dachunterkonstruktion, mindestens einem Solarmodul, einer um das Solarmodul herum ausgesparten Dacheindeckung und mindestens einem Eindeckrahmen.

Es sind Dächer, insbesondere Schieferdächer, bekannt, die aufgrund der baulichen Situation eine unzureichende Hinterlüftung aufweisen. Wird bei einem solchen Dach nachträglich eine Solaranlage installiert, werden also Solarmodule montiert, so ergibt sich hinsichtlich einer Entwässerung von unter der Solaranlage entstehendem Kondensat zumeist Probleme, da das Kondensat nicht hinreichend abgeführt wird und die Belüftung nicht ausreicht.

Aus der DE 202007012608 U1 geht eine Kühlanordnung eines Solarmoduls hervor, bei der ein Luftstrom unter dem Solarmodul geführt und teilweise in die Dachunterkonstruktion eingeleitet wird.

Aus der DE 19912743 A1 geht eine Solar-Dachkonstruktion hervor, bei der ein Solarmodul auf einer Unterspannbahn angeordnet und das Solarmodul von einer transparenten Dachhaut witterungsgeschützt abgedeckt wird.

Aus der DE 102004001875 A1 geht ein modulares Dachsystem mit hohem Vorfertigungsgrad hervor, das eine Außenschale aufweist, die eine Dacheindeckung, eine folienartige Unterspannbahn und ein Solarmodul aufweist.

Aus der FR 2944818 A1 geht eine Photovoltaikanlage hervor, die auf einem Dach installiert ist und eine Passage zur Belüftung aufweist. Aus der DE 19615306 A1 geht ein Bausatz zur Erstellung eines Dachs mittels Fertigdachelementen mit integrierten Großkollektoren hervor.

Aus der US 7406800 B2 geht ein Befestigungssystem für Solarmodule hervor.

Der Erfindung liegt daher die Aufgabe zugrunde, eine Dachanordnung anzugeben, die keine Feuchtigkeitsprobleme aufweist und vorzugsweise eine besonders gute Belüftung bietet. Die erfindungsgemäße Dachanordnung kann durch einen nachträglichen Einbau einer Solaranlage geschaffen werden oder aber auch als Neubaumaßnahme erfolgen.

Diese Aufgabe wird bei einer Dachanordnung der eingangs genannten Art dadurch gelöst, dass zwischen dem Solarmodul und der Dachunterkonstruktion eine Unterspannbahn angeordnet ist und im traufseitigen Bereich des Solarmoduls ein dem Eindeckrahmen angehörendes Eindeckrahmenunterteil angeordnet ist, das firstseitig einen Abschnitt des Solarmoduls untergreift und traufseitig einen Bereich der Oberseite der Dacheindeckung überlappt, wobei ein traufseitiger Endbereich der Unterspannbahn die Oberseite des Eindeckrahmenunterteils überlappt. Aufgrund des erfindungsgemäßen Vorgehens befindet sich zwischen der Dachunterkonstruktion und dem Solarmodul somit eine Unterspannbahn. Insbesondere ist es so, dass das übrige Dach keine Unterspannbahn aufweist, dass also nur der Bereich unter dem Solarmodul, vorzugsweise ein Bereich, der etwas größer als der Grundriss des Solarmoduls ist, mit der Unterspannbahn versehen wird. Schlägt sich Kondensat unter dem Solarmodul nieder oder gelangt dort sonstige Feuchtigkeit hin, so befindet sich die Flüssigkeit auf der Oberseite der Unterspannbahn, die die Flüssigkeit in Richtung Traufe abführt, wobei im unteren Bereich des Solarmoduls folgende Situation aufgrund der Erfindung gegeben ist: das vorzugsweise blechartige Eindeckrahmenunterteil untergreift einen firstseitigen Abschnitt des Solarmoduls und liegt traufseitig auf der Oberseite der Dacheindeckung auf. Die Unterspannbahn überlappt die Oberseite des Eindeckrahmenunterteils. Dies führt dazu, dass ablaufende Flüssigkeit auf der Oberseite der Unterspannbahn von dieser auf die Oberseite des Eindeckrahmenunterteils läuft und von dort auf die Oberseite der Dacheindeckung, das heißt, diese Flüssigkeit wird derart abgeführt, dass sie nicht in das Dach eindringen kann. Da - wie beschrieben - ein Ablaufen der Flüssigkeit möglich ist, also hinreichende Passiermaße bestehen, ist auch eine Belüftungssituation gegeben, sodass befeuchtete Bereiche abtrocknen können.

Nach einer Weiterbildung der Erfindung ist vorgesehen, dass der traufseitige Endbereich der Unterspannbahn auf der Oberseite des Eindeckrahmenunterteils aufliegt, insbesondere auf einen firstseitigen Abschnitt der Oberseite des Eindeckrahmenunterteils aufliegt. Durch das geschuppte Aufeinanderliegen der Unterspannbahn auf der Oberseite des Eindeckrahmenunterteils ist eine gute Abdichtung geschaffen. Vorzugsweise erstreckt sich die Unterspannbahn nur über einen Teilbereich, nämlich einen firstseitigen Teilbereich des Eindeckrahmenunterteils.

Eine Weiterbildung der Erfindung sieht vor, dass der traufseitige Endbereich der Unterspannbahn unter dem Solarmodul endet oder auf dem von außen sichtbaren Bereich des Eindeckrahmenunterteils endet. Die Unterspannbahn erstreckt sich somit nur unterhalb des Solarmoduls oder noch ein kleines Stück darüber hinaus, nicht jedoch ganz bis zur Traufe.

Ferner ist von Vorteil, wenn nur der von der Dacheindeckung ausgesparte Bereich mit der Unterspannbahn versehen ist. Dies ist derart zu verstehen, dass nicht das gesamte Dach eine Unterspannbahn oder mehrere Unterspannbahnen aufweist, sondern dass diese Unterspannbahn nur im Bereich des Solarmoduls angeordnet ist. Dies bedeutet nicht, dass der Grundriss der Unterspannbahn genauso groß ist wie das Solarmodul, sondern die Unterspannbahn kann auch an bestimmten Seiten größer sein, also unter dem Solarmodul hervortreten. Sollte ein Dach bereits eine Unterspannbahn aufweisen und dann unter der erfindungsgemäßen Solarmodulanordnung versehen werden, so liegt eine alternative, jedoch auch erfindungsgemäße Ausgestaltung vor, bei der nicht nur der von der Dacheindeckung ausgesparte Bereich mit der Unterspannbahn versehen ist, sondern ein größerer Bereich, insbesondere - wie angenommen - das gesamte Dach, im übrigen wird die Erfindung jedoch in gleicher Weise realisiert.

Ferner ist von Vorteil, wenn die Dachunterkonstruktion eine Schalung oder eine mit Lattung, insbesondere Querlattung, versehene Schalung ist. Derartige Dächer sind derart aufgebaut, dass auf Dachsparren eine Schalung angeordnet ist und auf diese Schalung dann die Unterspannbahn gelegt wird. Sollte auf der Schalung noch eine Lattung, insbesondere eine Querlattung, vorhanden sein, so wird die Unterspannbahn auf die Lattung gelegt.

Eine Weiterbildung der Erfindung sieht vor, dass die Dacheindeckung eine Schiefereindeckung, eine Ziegeleindeckung oder eine Betonsteineindeckung ist.

Ferner ist von Vorteil, wenn sich am traufseitigen Ende des Solarmoduls mindestens ein einen ersten und einen zweiten Schenkel aufweisender Einbauwinkel befindet, mit dem das Solarmodul am Dach befestigt ist. Der Einbauwinkel weist die beiden Schenkel auf, wobei gegen den einen eine Stirnseite des Solarmoduls anliegt. Der Einbauwinkel erstreckt sich nicht über die gesamte Breite des Solarmoduls, sondern weist eine kleinere, insbesondere wesentlich kleinere Breite auf. Es ist von Vorteil, wenn mehrere seitlich beabstandet zueinander liegende Einbauwinkel am traufseitigen Ende des Solarmoduls vorgesehen sind. Gegen diese liegt dann die Stirnseite des Solarmoduls an, wodurch dieses nicht vom Dach abrutschen kann. Selbstverständlich werden zusätzliche Befestigungsmittel vorgesehen, um das Solarmodul zu erhalten. Ferner sind vorzugsweise weitere Einbauwinkel vorgesehen, die dem firstseitigen Ende des Solarmoduls zugeordnet werden.

Zum Solarmodul ist noch zu erwähnen, dass im Zuge der Anmeldung oftmals von nur einem Solarmodul die Rede ist. Selbstverständlich können jedoch auch mehrere Solarmodule vorhanden sein, die zusammengefasst sind und nebeneinander liegen, dies insbesondere in Richtung vom First zur Traufe und auch quer dazu. Wenn also von einem Solarmodul gesprochen wird, schließt dies mehrere entsprechend benachbart angeordnete Solarmodule stets mit ein.

Insbesondere kann vorgesehen sein, dass der erste Schenkel des Einbauwinkels unter dem Solarmodul derart liegt, dass er sich zwischen der Unterseite des Solarmoduls und der Oberseite der Unterspannbahn befindet, insbesondere auf der Oberseite der Unterspannbahn aufliegt. Insofern wird also zunächst - ausgehend von der Dachunterkonstruktion - auf dieser das Eindeckrahmenunterteil, auf diesem die Unterspannbahn und auf diesem der erste Schenkel des Einbauwinkels angeordnet, wobei auf diesem Schenkel sich dann das Solarmodul abstützt. Die traufseitige Stirnseite des Solarmoduls wird von dem erwähnten zweiten Schenkel des Einbauwinkels abgestützt.

Eine Weiterbildung der Erfindung sieht vor, dass am traufseitigen Ende des Solarmoduls ein insbesondere zum Eindeckrahmen gehörendes Abdeckprofil angeordnet ist, das - zur Ausbildung mindestens einer Lufteinströmöffnung - mit einem Bereich auf dem zweiten Schenkel des Einbauwinkels aufliegt oder zum zweiten Schenkel des Einbauwinkels einen Abstand belässt. Liegt das Abdeckprofil mit seinem Bereich auf der traufseitigen Seite des zweiten Schenkels des Einbauwinkels auf, so dient dieser zweite Schenkel quasi als Abstandshalter, das heißt, der Bereich des Abdeckprofils liegt nicht direkt an der Stirnseite des Solarmoduls an, sondern mit Abstand, und zwar mit einem Abstand, der der Dicke des zweiten Schenkels des Einbauwinkels entspricht, sodass die Stirnseite des Solarmoduls zugänglich bleibt, wodurch mindestens eine sich dort befindliche Belüftungsöffnung zugänglich ist. Mithin gelangt in die Lufteinströmöffnung einströmende Luft zu der Belüftungsöffnung und kann ins Innere des Solarmoduls eintreten. Sollte der Bereich des Abdeckprofils nicht auf dem zweiten Schenkel aufliegen, sondern einen Abstand belassen, so ist die Lufteinströmöffnung entsprechend größer ausgebildet.

Ferner ist es vorteilhaft, wenn das Solarmodul zur Ausbildung eines durch sein Inneres verlaufenden Luftströmungswegs an seiner unteren Stirnseite und an seiner oberen Stirnseite jeweils mindestens eine Belüftungsöffnung aufweist. Die an der unteren Stirnseite liegende Belüftungsöffnung wurde bereits vorstehend erwähnt. Eine entsprechende beziehungsweise mindestens eine entsprechende Belüftungsöffnung befindet sich an der oberen Stirnseite des Solarmoduls, sodass Luft das Solarmodul, vorzugsweise von unten nach (schräg) oben (Thermik) durchströmen kann.

Wie vorstehend erwähnt ist vorzugsweise vorgesehen, dass die Lufteinströmöffnung mit der an der unteren Stirnseite des Solarmoduls ausgebildeten Belüftungsöffnung strömungstechnisch kommuniziert.

Nach einer bevorzugten Ausführungsform der Erfindung ist vorgesehen, dass die Unterseite des Solarmoduls mindestens eine zur Unterspannbahn offene Luftöffnung aufweist, die mit dem Luftströmungsweg kommuniziert. Befindet sich somit Feuchtigkeit unterhalb des Solarmoduls, beispielsweise auf der Oberseite der Unterspannbahn, so kann diese verdampfen, durch die Luftöffnung an der Unterseite des Solarmoduls in das Innere des Solarmoduls eintreten und über den Luftströmungsweg nach außen getragen werden.

Ferner ist von Vorteil, wenn der Eindeckrahmen ein Eindeckrahmenoberteil mit mindestens einer mindestens eine Luftausströmöffnung aufweisenden Lufthutze aufweist, wobei das Eindeckrahmenoberteil firstseitig einen Bereich der Dacheindeckung unterlappt und traufseitig einen Bereich der Oberseite des Solarmoduls überlappt. Damit wird im oberen Bereich, also im Firstbereich, das Solarmodul feuchtigkeitsdicht an die Dacheindeckung angeschlossen. Diesen Anschluss nimmt das Eindeckrahmenoberteil, das vorzugweise ein Blechteil ist, vor. Luft, die entlang des Luftströmungswegs, also im Innern des Solarmoduls strömt, wird aufgrund der Thermik die Belüftungsöffnung an der oberen Stirnseite verlassen und in die Lufthutze eintreten und von dort über die Luftausströmöffnung ins Freie gelangen. Damit ist eine Luftdurchströmung der gesamten Solarmodulanordnung gewährleistet.

Selbstverständlich ist es möglich, dass das Solarmodul nicht nur eine, sondern mehrere, vorzugsweise in Reihe zueinander beabstandet liegende Belüftungsöffnungen sowohl an seiner unteren Stirnseite als auch an seiner oberen Stirnseite aufweisen.

Ferner ist vorgesehen, dass der Eindeckrahmen nicht nur ein Eindeckrahmenunterteil und ein Eindeckrahmenoberteil, sondern auch zwei beidseitig des Solarmoduls anzuordnende Eindeckrahmenseitenteile aufweist, um dort das Solarmodul an die Dacheindeckung anzuschließen. Auf die konkrete Ausgestaltung der Eindeckrahmenseitenteile wird hier nicht eingegangen, da sie in üblicher Weise ausgebildet sein können.

Es ist weiterhin von Vorteil, wenn die Belüftungsöffnung an der oberen Stirnseite des Solarmoduls mit der Luftausströmöffnung der Lufthutze strömungstechnisch kommuniziert. Dies wurde vorstehend bereits erwähnt und führt dazu, dass die sich im Zuge des Durchströmens des Luftströmungswegs aufwärmende Luft über die Lufthutze nach außen treten kann.

Schließlich ist von Vorteil, wenn ein firstseitiger Bereich der Unterspannbahn unterhalb des Eindeckrahmenoberteils liegt. Die Unterspannbahn erstreckt sich also nicht bis zum First, sondern nur in Richtung First, und zwar so weit, dass sie unterhalb des Eindeckrahmenoberteils, vorzugsweise unterhalb des gesamten Eindeckrahmenoberteils, liegt.

Nach einem weiteren Ausführungsbeispiel, das vorstehend bereits genannt wurde ist es jedoch auch möglich, dass sich die Unterspannbahn bis zum First erstreckt, wobei vorzugsweise das gesamte Dach mit einer Unterspannbahn oder mehreren Unterspannbahnen versehen ist. Jedoch werden auch dann die erfindungsgemäßen Merkmale realisiert.

Die Zeichnungen veranschaulichen die Erfindung anhand von Ausführungsbeispielen, und zwar zeigt:
- Figur 1: eine schematische Schnittansicht durch eine Dachanordnung,
- Figur 2: ein Detail der Dachanordnung nach einem ersten Ausführungsbeispiel und
- Figur 3: ein Detail der Dachanordnung nach einem zweiten Ausführungsbeispiel.

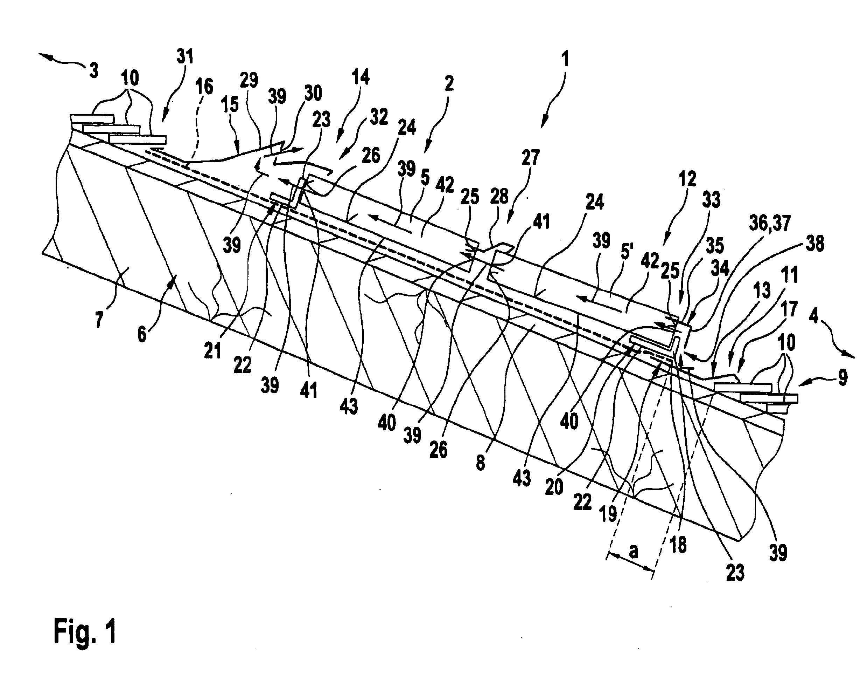

Die Figur 1 zeigt einen Abschnitt eines Dachs 1, das eine Solarmodulanordnung 2 aufweist. Das Dach 1 ist als Schrägdach ausgebildet, d.h., es fällt von dem First 3 zur Traufe 4 schräg ab. Die Solarmodulanordnung 2 weist mindestens ein Solarmodul 5 auf, wobei in der Figur 1 zwei Solarmodule 5, 5' dargestellt sind. Die Erfindung ist auf die Anzahl der Solarmodule nicht beschränkt. So können beispielsweise mehr als zwei oder auch weniger als zwei Solarmodule vorgesehen sein, die sich in einer Reihe zwischen First 3 und Traufe 4 erstrecken. Ferner ist es möglich, dass alternativ oder zusätzlich mehrere Solarmodule quer, insbesondere rechtwinklig zur Richtung zwischen First 3 und Traufe 4, nebeneinander liegen, also in die Papierebene der Figur 1 hinein. Die Erfindung wird dadurch nicht beeinflusst; entsprechend betroffene Merkmale sind dann angepasst zu lesen.

Das Dach 1 weist eine Dachunterkonstruktion 6 auf, die im Falle der Figur 1 aus Dachsparren 7 mit einer Schalung 8 besteht. Auf der Schalung 8 ist eine Dacheindeckung 9 angeordnet, die vorzugsweise aus Schiefertafeln 10 besteht. Alternativ können jedoch auch Dachziegel oder Betonsteine oder dergleichen vorgesehen sein.

Um die Solarmodule 5, 5' gegenüber der Dacheindeckung 9 abzudichten ist ein Eindeckrahmen 11 vorgesehen, der die Solarmodule 5, 5' umgibt und im traufseitigen Bereich 12 des Solarmoduls 5' ein Eindeckrahmenunterteil 13 und im firstseitigen Bereich 14 des Solarmoduls 5 ein Eindeckrahmenoberteil 15 aufweist. Ferner sind zwei Eindeckrahmenseitenteile vorgesehen, die den Seiten der Solarmodule 5, 5' zugeordnet sind, die jedoch nicht dargestellt und für die Erfindung nicht von Bedeutung sind.

Der Figur 1 ist entnehmbar, dass Solarmodule 5, 5' innerhalb eines dacheindeckungsfreien Bereiches liegen. Insbesondere dann, wenn die erfindungsgemäße Solarmodulanordnung 2 nachträglich im Zuge einer Nachrüstung auf dem Dach 1 installiert werden soll, werden die erfindungsgemäßen Maßnahmen getroffen. Es wird im vorliegenden Ausführungsbeispiel davon ausgegangen, dass das bestehende Dach 1 die Dachunterkonstruktion 6 - wie beschrieben - aufweist und mit der beschriebenen Dacheindeckung 9 versehen ist. Auf der Schalung 8 befindet sich keine Unterspannbahn. Soll nun die erfindungsgemäße Solarmodulanordnung 2 installiert werden, so wird die Dacheindeckung 9 - wie aus der Figur 1 ersichtlich - abgedeckt, sodass in dem freigelegten Bereich die Solarmodulanordnung 2 angeordnet werden kann. Hierzu wird die Konstruktion, die sich aus den Figuren 1 bis 3 ergeben geschaffen, welche nachstehend konstruktiv erläutert wird.

Das Eindeckrahmenunterteil 13 ist derart an der Schalung 8 befestigt, dass es traufseitig einen Bereich 17 der Oberseite der Dacheindeckung 9 überlappt. Ferner ist eine Unterspannbahn 16 auf der Schalung 8 angeordnet. In den Figuren 1 bis 3 ist die Unterspannbahn 16 mit gestrichelter Linie dargestellt. Sie weist eine derartige Länge auf, dass sie firstseitig die Dacheindeckung 9 unterlappt und traufseitig mit einem Endbereich 18 auf der Oberseite des Eindeckrahmenunterteils 13 aufliegt, derart, dass der Endbereich 18 auf einem firstseitigen Abschnitt 19 der Oberseite des Eindeckrahmenunterteils 13 aufliegt. Auf den Überlappungsbereich von Unterspannbahn 16 und Eindeckrahmenunterteil 13 ist ein Einbauwinkel 20 angeordnet und an der Dachunterkonstruktion 6 befestigt, wobei - aus der Figur 1 nicht ersichtlich - mehrere derartige Einbauwinkel 20 über die Breite des Solarmoduls 5' beabstandet verteilt vorgesehen sind. Ferner befinden sich firstseitig weitere Einbauwinkel 21, die auf der Unterspannbahn 16 aufliegen und ebenfalls an der Dachunterkonstruktion 6 befestigt sind. Die Anordnung ist derart getroffen, dass die Einbauwinkel 20, 21 erste Schenkel 22 und zweite Schenkel 23 aufweisen, wobei die ersten Schenkel 22 auf der Unterspannbahn 16 aufliegen.

Die Solarmodule 5, 5' sind derart montiert, dass sie mit ihren Unterseiten 24 auf der Unterspannbahn 16 aufliegen, teilweise aufliegen oder in Richtung auf die Unterspannbahn 16 weisen, wobei eine untere Stirnseite 25 des Solarmoduls 5' gegen die Innenseiten der zweiten Schenkel 23 der unteren Einbauwinkel 20 tritt. Dementsprechend treten die zweiten Schenkel 23 der oberen Einbauwinkel 21 gegen die obere Stirnseite 26 des Solarmoduls 5'. Mit geeigneten Befestigungsmitteln sind die beiden Solarmodule 5, 5' an den Einbauwinkeln 20, 21 befestigt. Im Bereich einer Fuge oder Stoßfuge 27 zwischen den Solarmodulen 5, 5' ist ein mittleres Eindeckrahmenblech 28 zur Überbrückung dieser Stoßfuge 27 angeordnet.

Das Eindeckrahmenoberteil 15 weist eine Lufthutze 29 mit mindestens einer Luftauströmöffnung 30 auf und ist derart angeordnet, dass es firstseitig einen Bereich 31 der Dacheindeckung 9 unterlappt und traufseitig einen Bereich 32 der Oberseite des Solarmoduls 5 überlappt.

Am traufseitigen Ende 33 des Solarmoduls 5' ist ein Abdeckprofil 34 an dem Solarmodul 5' angeordnet, das winkelförmig gestaltet ist und einen Schenkel 35 sowie einen Schenkel 36 aufweist. Der Schenkel 35 ist am Solarmodul 5' befestigt. Der Schenkel 36 bildet einen Bereich 37 des Abdeckprofils 34, der parallel oder etwa parallel zur Stirnseite 25 des Solarmoduls 5' verläuft, wobei er vorzugsweise mit Abstand zu den zweiten Schenkeln 23 der Einbauwinkel 20 verläuft. Alternativ könnte auch vorgesehen sein, dass der Bereich 37 an den zweiten Schenkeln 23 der Einbauwinkel 20 anliegt. Auf diese Art und Weise wird eine Lufteinströmöffnung 38 geschaffen, durch die Luft (Pfeile 39) in das Solarmodul 5' eintreten kann. Hierzu weist das Solarmodul 5' an seiner Stirnseite 25 mindestens eine Belüftungsöffnung 40 auf. Auch die entsprechende Stirnseite 25 des Solarmoduls 5 ist unter dem Eindeckrahmenblech 28 mit mindestens einer derartigen Belüftungsöffnung 40 versehen. Die oberen Stirnseiten 26 der Solarmodule 5, 5' sind ebenfalls jeweils mit mindestens einer Belüftungsöffnung 41 versehen. Auf diese Art und Weise kann sich in jedem Solarmodul 5, 5' ein Luftströmungsweg 42 ausbilden, wobei der Luftströmungsweg 42 mit mindestens einer Luftöffnung 43 an der jeweiligen Unterseite 24 der Solarmodule 5, 5' kommuniziert. Vorzugsweise sind mehrere Luftöffnungen 43 bei jedem Solarmodul 5, 5' vorgesehen oder das Solarmodul 5, 5' ist jeweils nach unten hin offen ausgebildet, sodass auf diese Art und Weise die jeweilige Luftöffnung 43 geschaffen ist. Im Bereich der Fuge 27 kommuniziert die Belüftungsöffnung 41 des Solarmoduls 5' mit der Belüftungsöffnung 40 des Solarmoduls 5. Die Belüftungsöffnung 41 in der oberen Stirnseite 26 des Solarmoduls 5 kommuniziert mit dem Inneren der Lufthutze 29, die die Luftausströmöffnung 30 aufweist.

Eine derart ausgebildete beziehungsweise montierte Solarmodulanordnung 2 weist folgende Eigenschaften auf: Bildet sich unterhalb der Solarmodule 5, 5' Kondensat, so kann dieses auf der Oberseite der Unterspannbahn 16 nach unten laufen und tritt dabei auf die Oberseite des Eindeckrahmenunterteils 13 und sodann auf die Dacheindeckung 9, die unterhalb, also traufseitig, der Solarmodule 5, 5' liegt. Regenwasser, das auf das Dach 1 aufschlägt, läuft über die firstseitige Dacheindeckung 9 auf die Oberseite des Eindeckrahmenoberteils 15, wobei die Lufthutze 29 passiert wird, ohne dass Feuchtigkeit in das Innere der Lufthutze 29 eintritt, und gelangt auf diese Art und Weise auf die Oberseite des Solarmoduls 5, von dort über das mittlere Eindeckrahmenblech 28 auf die Oberseite des Solarmoduls 5', von dort über das Abdeckprofil 34 auf die Oberseite des Eindeckrahmenunterteils 13 und von dort schließlich auf die Dacheindeckung 9, die unterhalb der Solarmodule 5, 5' liegt, und wird dann in der Traufe des Dachs 1 aufgefangen. Ferner wird die Solarmodulanordnung 2 sehr gut belüftet, sodass Kondensat und dergleichen sehr schnell verdunstet. Es ergibt sich eine Luftströmung gemäß der Pfeile 39 aufgrund der Thermik, also von unten nach oben, wobei sich die Luft - je höher sie steigt - umso mehr erwärmt. Die Luft tritt gemäß der Pfeile 39 in die Lufteinströmöffnung 38 ein und gelangt dann zur Belüftungsöffnung 40 des Solarmoduls 5', strömt entlang des Luftströmungswegs 42 im Innern des Solarmoduls 5', wobei sie auch an der Oberseite der Unterspannbahn 16 unterhalb des Solarmoduls 5' entlang streicht. Die Luft tritt dann aus der Belüftungsöffnung 41 des Solarmoduls 5' aus und in die Belüftungsöffnung 40 des Solarmoduls 5 wieder ein, wobei auch die Fuge 27 belüftet wird, dies insbesondere auch in Bezug auf die dort liegende Oberseite der Unterspannbahn 16. Anschließend durchströmt die Luft gemäß der Pfeile 39 das Innere des Solarmoduls 5, wobei sie wiederum an der Oberseite des dortigen Bereichs der Unterspannbahn 16 entlang streicht, bis sie schließlich aus der Belüftungsöffnung 41 des Solarmoduls 5 austritt und bis in die Lufthutze 29 gelangt und dort aus der Luftauströmöffnung 30 wieder ins Freie austritt. Hieraus ergibt sich eine einwandfreie Belüftungssituation.

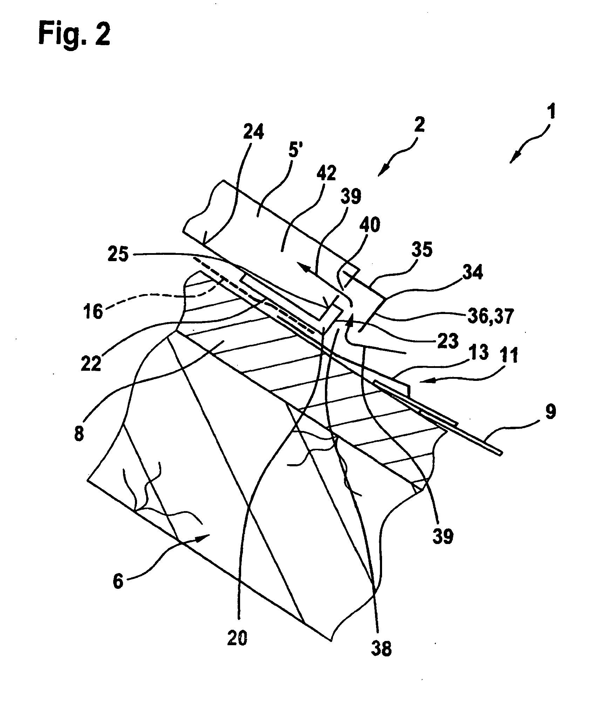

Die Figur 2 verdeutlicht den unteren Bereich der Solarmodulanordnung 2, so wie er sich aus der Figur 1 ergibt, wobei noch bemerkt werden soll, dass aufgrund der Abstände der seitlich nebeneinander liegenden Einbauwinkel 20 zwischen diesen Einbauwinkeln 20 Durchlässe zum Ablauf des Kondensats geschaffen sind, da die ersten Schenkel 22 der Einbauwinkel 20 in Bezug auf ihre Dicke Abstandshalter bilden.

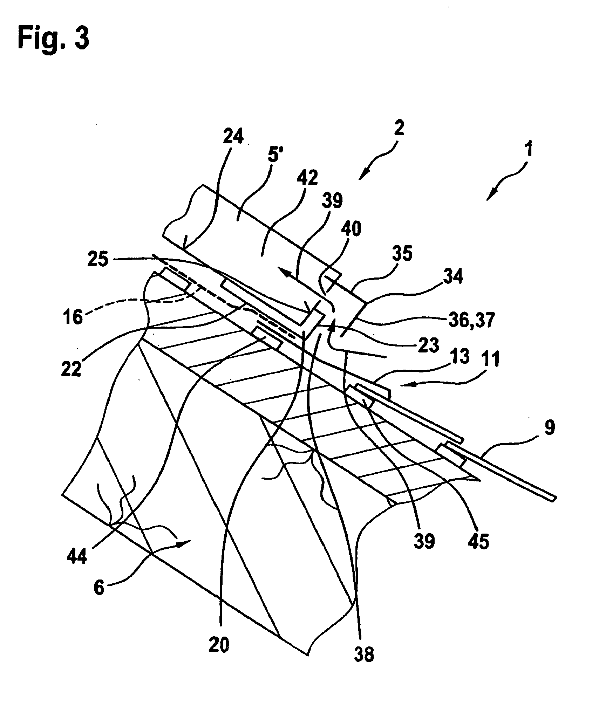

Die Figur 3 verdeutlicht ein weiteres Ausführungsbeispiel der Erfindung, das sich vom Ausführungsbeispiel der Figuren 1 und 2 lediglich dadurch unterscheidet, dass eine andere Dachunterkonstruktion 6 dadurch vorliegt, dass auf der Schalung 8 eine Lattung 44 angeordnet ist, die als Querlattung 45 ausgebildet ist. Der sich dadurch ergebende Unterschied ist lediglich, dass die Unterspannbahn 16 nunmehr nicht auf der Oberseite der Schalung 8 aufliegt, sondern auf der Oberseite der Querlattung 45. Dementsprechend werden die Einbauwinkel 20, 21 an der Querlattung 45. Die Dacheindeckung 9 ist beim Ausführungsbeispiel der Figur 3 ebenfalls an der Querlattung 45 befestigt. Ansonsten gelten die Ausführungen zum Ausführungsbeispiel der Figur 1 und 2 entsprechend beim Ausführungsbeispiel der Figur 3.

## Patentansprüche

1. Dachanordnung mit einer Dachunterkonstruktion, mindestens einem Solarmodul, einer um das Solarmodul herum ausgesparten Dacheindeckung und mindestens einem Eindeckrahmen, **dadurch gekennzeichnet, dass** zwischen dem Solarmodul (5,5') und der Dachunterkonstruktion (6) eine Unterspannbahn (16) angeordnet ist und im traufseitigen Bereich (12) des Solarmoduls (5,5') ein dem Eindeckrahmen (11) angehörendes Eindeckrahmenunterteil (13) angeordnet ist, das firstseitig einen Abschnitt (19) des Solarmoduls (5,5') untergreift und traufseitig einen Bereich (17) der Oberseite der Dacheindeckung (9) überlappt, wobei ein traufseitiger Endbereich (18) der Unterspannbahn (16) die Oberseite des Eindeckrahmenunterteils (13) überlappt.

2. Dachanordnung nach Anspruch 1, **dadurch gekennzeichnet, dass** der traufseitige Endbereich (18) der Unterspannbahn (16) auf der Oberseite des Eindeckrahmenunterteils (13) aufliegt, insbesondere auf einen firstseitigen Abschnitt (19) der Oberseite des Eindeckrahmenunterteils (13) aufliegt.

3. Dachanordnung nach einem der vorhergehenden Ansprüche, **dadurch gekennzeichnet, dass** der traufseitige Endbereich (18) der Unterspannbahn (16) unter dem Solarmodul (5,5') endet oder auf dem von außen sichtbaren Bereich des Eindeckrahmenunterteils (13) endet.

4. Dachanordnung nach einem der vorhergehenden Ansprüche, **dadurch gekennzeichnet, dass** nur der von der Dacheindeckung (9) ausgesparte Bereich mit der Unterspannbahn (16) versehen ist.

5. Dachanordnung nach einem der vorhergehenden Ansprüche, **dadurch gekennzeichnet, dass** die Dachunterkonstruktion (6) eine Schalung (8) oder eine mit Lattung (44), insbesondere Querlattung (45), versehene Schalung (8) ist.

6. Dachanordnung nach einem der vorhergehenden Ansprüche, **dadurch gekennzeichnet, dass** die Dacheindeckung (9) eine Schiefereindeckung, eine Ziegeleindeckung oder eine Betonsteineindeckung ist.

7. Dachanordnung nach einem der vorhergehenden Ansprüche, **dadurch gekennzeichnet, dass** sich am traufseitigen Ende (33) des Solarmoduls (5,5') mindestens ein einen ersten und einen zweiten Schenkel (22,23) aufweisender Einbauwinkel (20) befindet, mit dem das Solarmodul (5,5') am Dach (1) befestigt ist.

8. Dachanordnung nach Anspruch 7, **dadurch gekennzeichnet, dass** die Breite des Einbauwinkels (20,21) kleiner, insbesondere wesentlich kleiner, als die Breite des Solarmoduls (5,5') ausgebildet ist.

9. Dachanordnung nach Anspruch 7 oder 8, **dadurch gekennzeichnet, dass** der erste Schenkel (22) des Einbauwinkels (20) unter dem Solarmodul (5,5') derart liegt, dass er sich zwischen der Unterseite (24) des Solarmoduls und der Oberseite der Unterspannbahn (16) befindet, insbesondere auf der Oberseite der Unterspannbahn (16) aufliegt.

10. Dachanordnung nach einem der vorhergehenden Ansprüche, **dadurch gekennzeichnet, dass** mehrere seitlich beabstandet zueinander liegende Einbauwinkel (20) am traufseitigen Ende des Solarmoduls (5,5') vorgesehen sind.

11. Dachanordnung nach einem der Ansprüche 7 bis 10, **dadurch gekennzeichnet, dass** am traufseitigen Ende (33) des Solarmoduls (5,5') ein insbesondere zum Eindeckrahmen (11) gehörendes Abdeckprofil (34) angeordnet ist, das - zur Ausbildung mindestens einer Lufteinströmöffnung (38) - mit einem Bereich (37) auf dem zweiten Schenkel (23) des Einbauwinkels (20) aufliegt oder zum zweiten Schenkel (23) des Einbauwinkels (20) einen Abstand belässt.

12. Dachanordnung nach einem der vorhergehenden Ansprüche, **dadurch gekennzeichnet, dass** das Solarmodul (5,5') zur Ausbildung eines durch sein Inneres verlaufenden Luftströmungswegs (42) an seiner unteren Stirnseite (25) und an seiner oberen Stirnseite (26) jeweils mindestens eine Belüftungsöffnung (40,41) aufweist.

13. Dachanordnung nach Anspruch 12 in Verbindung mit Anspruch 11, **dadurch gekennzeichnet, dass** die Lufteinströmöffnung (38) mit der an der unteren Stirnseite (25) des Solarmoduls (5,5') ausgebildeten Belüftungsöffnung (40) kommuniziert.

14. Dachanordnung nach Anspruch 12 oder 13, **dadurch gekennzeichnet, dass** die Unterseite (24) des Solarmoduls (5,5') mindestens eine zur Unterspannbahn (16) offene Luftöffnung (43) aufweist, die mit dem Luftströmungsweg (42) kommuniziert.

15. Dachanordnung nach einem der vorhergehenden Ansprüche, **dadurch gekennzeichnet, dass** der Eindeckrahmen (11) ein Eindeckrahmenoberteil (15) mit mindestens einer mindestens eine Luftausströmöffnung (30) aufweisenden Lufthutze (29) aufweist, wobei das Eindeckrahmenoberteil (15) firstseitig einen Bereich (31) der Dacheindeckung (9) unterlappt und traufseitig einen Bereich (32) der Oberseite des Solarmoduls (5,5') überlappt.

16. Dachanordnung nach Anspruch 12 in Verbindung mit Anspruch 15, **dadurch gekennzeichnet, dass** die Belüftungsöffnung (41) an der oberen Stirnseite (26) des Solarmoduls (5,5') mit der Luftausströmöffnung (30) der Lufthutze (29) kommuniziert.

17. Dachanordnung nach Anspruch 15 oder 16, **dadurch gekennzeichnet, dass** ein firstseitiger Bereich der Unterspannbahn (16) unterhalb des Eindeckrahmenoberteils (15) liegt.

## Claims

1. Roof assembly having a roof substructure, at least one solar module, a roof cladding recessed around the solar module, and at least one covering frame, **characterised in that** a roof lining (16) is arranged between the solar module (5, 5') and the roof substructure (6), and that a covering frame lower part (13) associated with the covering frame (11) is arranged in the region (12) of the solar module (5, 5') on the eaves side, which reaches below a portion (19) of the solar module (5, 5') on the ridge side and overlaps a region (17) of the upper side of the roof cladding (9) on the eaves side, wherein an end region (18) of the roof lining (16) on the eaves side overlaps the upper side of the covering frame lower part (13).

2. Roof assembly according to claim 1, **characterised in that** the end region (18) of the roof lining (16) on the eaves side rests upon the upper side of the covering frame lower part (13), and in particular rests upon a portion (19) on the ridge side of the upper side of the covering frame lower part (13).

3. Roof assembly according to any one of the preceding claims, **characterised in that** the end region (18) of the roof lining (16) on the eaves side ends beneath the solar module (5, 5'), or ends on the region of the covering frame lower part (13) that is visible from the outside.

4. Roof assembly according to any one of the preceding claims, **characterised in that** only the region not covered by the roof cladding (9) is provided with the roof lining (16).

5. Roof assembly according to any one of the preceding claims, **characterised in that** the roof substructure (6) is a planking (8) or a planking (8) provided with a lathing (44), in particular a counterlathing (45).

6. Roof assembly according to any one of the preceding claims, **characterised in that** the roof cladding (9) is a slate cladding, a tile cladding or a concrete tile cladding.

7. Roof assembly according to any one of the preceding claims, **characterised in that**, at the end (33) of the solar module (5, 5') on the eaves side, is at least one mounting bracket (20) presenting a first and a second leg (22, 23) by means of which the solar module (5, 5') is fixed on the roof (1).

8. Roof assembly according to claim 7, **characterised in that** the width of the mounting bracket (20, 21) is smaller, in particular significantly smaller, than the width of the solar module (5, 5').

9. Roof assembly according to claim 7 or 8, **characterised in that** the first leg (22) of the mounting bracket (20) lies beneath the solar module (5, 5') in such a way that it is situated between the underside (24) of the solar module and the upper side of the roof lining (16), in particular rests upon the upper side of the roof lining (16).

10. Roof assembly according to any one of the preceding claims, **characterised in that** several mounting brackets (20) laterally spaced apart from each other are provided on the end of the solar module (5, 5') on the eaves side.

11. Roof assembly according to any one claims 7 to 10, **characterised in that** a covering profile (34), in particular a profile associated with the covering frame (11), is arranged on the end (33) of the solar module (5, 5') on the eaves side, the profile resting with a region (37) on the second leg (23) of the mounting bracket (20) or keeping a distance to the second leg (23) of the mounting bracket (20) in order to form at least one air entrance opening (38).

12. Roof assembly according to any one of the preceding claims, **characterised in that** the solar module (5, 5') has at least one ventilation opening (40, 41) on each of its lower front face (25) and its upper front face (26) in order to form an air stream path (42) extending through its interior.

13. Roof assembly according to claim 12 in connection with claim 11, **characterised in that** the air entrance opening (38) is in communication with the ventilation opening (40) formed in the lower front face (25) of the solar module (5, 5').

14. Roof assembly according to claim 12 or 13, **characterised in that** the underside (24) of the solar module (5, 5') has at least one air opening (43) that opens to the roof lining (16) and is in communication with the air stream path (42).

15. Roof assembly according to any one of the preceding claims, **characterised in that** the covering frame (11) has a covering frame upper part (15) with at least one air scoop (29) having at least one air outflow opening (30), wherein the covering frame upper part (15) reaches beneath a region (31) of the roof cladding (9) on the ridge side, and overlaps a region (32) of the upper side of the solar module (5, 5') on the eaves side.

16. Roof assembly according to claim 12 in connection with claim 15, **characterised in that** the ventilation opening (41) on the upper front face (26) of the solar module (5, 5') is in communication with the air outflow opening (30) of the air scoop (29).

17. Roof assembly according to claim 15 or 16, **characterised in that** a region of the roof lining (16) on the ridge side lies beneath the covering frame upper part (15).

## Revendications

1. Agencement de toit avec une sous-construction de toit, au moins un module solaire, une couverture du toit évidée autour du module solaire, et au moins un encadrement, **caractérisé en ce qu'**un écran de sous-toiture (16) est disposé entre le module solaire (5, 5') et la sous-construction de toit (6), et une partie inférieure de l'encadrement (13) appartenant à l'encadrement (11) est disposée dans la région du côté de la gouttière (12) du module solaire (5, 5'), la partie inférieure prenant par dessous une partie (19) du module solaire (5, 5') du côté du faîte, et chevauchant une région (17) de la face supérieure de la couverture du toit (9) du côté de la gouttière, une partie d'extrémité (18) du côté de la gouttière de l'écran de sous-toiture (16) chevauchant la face supérieure de la partie inférieure de l'encadrement (13).

2. Agencement de toit selon la revendication 1, **caractérisé en ce que** la partie d'extrémité (18) du côté de la gouttière de l'écran de sous-toiture (16) s'appuie sur la face supérieure de la partie inférieure de l'encadrement (13), notamment s'appuie sur une partie (19) du côté du faîte de la face supérieure de la partie inférieure de l'encadrement (13).

3. Agencement de toit selon l'une quelconque des revendications précédentes, **caractérisé en ce que** la partie (18) du côté de la gouttière de l'écran de sous-toiture (16) se termine sous le module solaire (5, 5'), ou se termine sur la région de la partie inférieure de l'encadrement (13) visible de l'extérieur.

4. Agencement de toit selon l'une quelconque des revendications précédentes, **caractérisé en ce que** seulement la région évidée de la couverture du toit (9) est munie de l'écran de sous-toiture (16).

5. Agencement de toit selon l'une quelconque des revendications précédentes, **caractérisé en ce que** la sous-construction du toit (6) est une voligeage (8) ou une voligeage (8) avec un lattis (44), notamment avec un contre-lattis (45).

6. Agencement de toit selon l'une quelconque des revendications précédentes, **caractérisé en ce que** la couverture du toit (9) est une couverture en ardoise, une couverture en tuiles ou une couverture en tuiles en béton.

7. Agencement de toit selon l'une quelconque des revendications précédentes, **caractérisé en ce qu'**à l'extrémité (33) du côté de la gouttière du module solaire (5, 5') se trouve une équerre de montage (20) présentant au moins une première et une seconde branche (22, 23), avec laquelle le module solaire (5, 5') est fixé au toit (1).

8. Agencement de toit selon la revendication 7, **caractérisé en ce que** la largeur de l'équerre de montage (20, 21) est inférieure, notamment nettement inférieure, à la largeur du module solaire (5, 5').

9. Agencement de toit selon la revendication 7 ou 8, **caractérisé en ce que** la première branche (22) de l'équerre de montage (20) est située sous le module solaire (5, 5') de telle manière qu'elle se trouve entre la face inférieure (24) du module solaire et la face supérieure de l'écran de sous-toiture (16), notamment qu'elle s'appuie sur la face supérieure de l'écran de sous-toiture (16).

10. Agencement de toit selon l'une quelconque des revendications précédentes, **caractérisé en ce que** plusieurs équerres de montage (20) latéralement espacées l'une de l'autre sont prévues sur l'extrémité du côté de la gouttière du module solaire (5, 5').

11. Agencement de toit selon l'une quelconque des revendications 7 à 10, **caractérisé en ce qu'** un profilé de couverture (34), notamment appartenant à l'encadrement (11), est disposé sur l'extrémité (33) du côté de la gouttière du module solaire (5, 5'), le profilé s'appuyant sur la seconde branche (23) de l'équerre de montage (20) avec une région (37), ou laissant un espace vers la seconde branche (23) de l'équerre de montage (20), pour former au moins une ouverture d'entrée d'air (38).

12. Agencement de toit selon l'une quelconque des revendications précédentes, **caractérisé en ce que** le module solaire (5, 5') présente, dans sa face frontale inférieure (25) et dans sa face frontale supérieure (26), respectivement au moins une orifice d'aérage (40, 41) pour former un chemin d'écoulement d'air (42) s'étendant à travers son intérieur.

13. Agencement de toit selon la revendication 12 en combinaison avec la revendication 11, **caractérisé en ce que** l'ouverture d'entrée d'air (38) est en communication avec l'orifice d'aérage (40) formée dans la face frontale inférieure (25) du module solaire (5, 5').

14. Agencement de toit selon la revendication 12 ou 13, **caractérisé en ce que** la face inférieure (24) du module solaire (5, 5') présente au moins une orifice d'air (43) qui s'ouvre vers l'écran de sous-toiture (16) et est en communication avec le chemin d'écoulement d'air (42).

15. Agencement de toit selon l'une quelconque des revendications précédentes, **caractérisé en ce que** l'encadrement (11) présente une partie supérieure de l'encadrement (15) avec au moins une prise d'air (29) présentant au moins une ouverture de sortie d'air (30), la partie supérieure de l'encadrement (15) avançant, du côté du faîte, sous une région (31) de la couverture du toit (9), et chevauchant, du côté de la gouttière, une région (32) de la face supérieure du module solaire (5, 5').

16. Agencement de toit selon la revendication 12 en combinaison avec la revendication 15, **caractérisé en ce que** l'orifice d'aérage (41) dans la face frontale supérieure (26) du module solaire (5, 5') est en communication avec l'ouverture de sortie d'air (30) de la prise d'air (29).

17. Agencement de toit selon la revendication 15 ou 16, **caractérisé en ce qu'**une région du côté de la gouttière de l'écran de sous-toiture (16) se trouve au-dessous de la partie supérieure de l'encadrement (15).
